(19) **Europäisches Patentamt / European Patent Office / Office européen des brevets**

(11) **EP 4 610 289 A1**

(12) # EUROPEAN PATENT APPLICATION

(43) Date of publication:
**03.09.2025 Bulletin 2025/36**

(21) Application number: **24160556.7**

(22) Date of filing: **29.02.2024**

(51) International Patent Classification (IPC):
$C08G\ 18/48^{(2006.01)}$     $C08G\ 18/58^{(2006.01)}$
$C08G\ 18/67^{(2006.01)}$     $C08G\ 18/76^{(2006.01)}$
$C08L\ 75/16^{(2006.01)}$     $H01M\ 10/052^{(2010.01)}$
$H01M\ 10/0565^{(2010.01)}$

(52) Cooperative Patent Classification (CPC):
**C08G 18/2027; C08F 290/067; C08G 18/225;
C08G 18/36; C08G 18/4816; C08G 18/4829;
C08G 18/4883; C08G 18/5021; C08G 18/581;
C08G 18/6696; C08G 18/672; C08G 18/673;
C08G 18/725; C08G 18/7664; C08G 18/7671;**
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BASF SE
67056 Ludwigshafen am Rhein (DE)**

(72) Inventors:
- **CRISTADORO, Anna Maria
  49448 Lemfoerde (DE)**
- **ROY, Nabarun
  49448 Lemfoerde (DE)**
- **MUELLER, Ann-Kathrin
  49448 Lemfoerde (DE)**
- **ALBUERNE, Julio
  49448 Lemfoerde (DE)**
- **MEYER, Andre
  49448 Lemfoerde (DE)**
- **KLEEMANN, Ann-Kristin
  49448 Lemfoerde (DE)**
- **PAULUS, Wolfgang
  67056 Ludwigshafen am Rhein (DE)**
- **EMGE, Andreas
  63538 Grosskrotzenburg (DE)**
- **MELLOH, Carola
  49448 Lemfoerde (DE)**
- **ILLGUTH, Rolf
  49448 Lemfoerde (DE)**

(74) Representative: **Altmann Stößel Dick
Patentanwälte PartG mbB
Isartorplatz 1
80331 München (DE)**

(54) **PU HYBRID SEALING MATERIAL FOR LITHIUM-ION BATTERIES**

(57)     The present invention relates to a composition for preparing shaped body with improved resistance to compositions comprising lithium salts, the composition comprising an elastomer comprising polyurethane units and ethylenically unsaturated units, wherein the elastomer is obtained or obtainable by reacting a composition (PC) comprising at least one polyol (P1) and at least one compound (E1) which comprises at least one ethylenically unsaturated group and an isocyanate component (IC) comprising at least one polyisocyanate. The present invention also relates to a shaped body with improved resistance to compositions comprising lithium salts, the shaped body comprising said composition, a process for preparing a shaped body and also the use of the composition according to the present invention for the preparation of a shaped body, wherein the shaped body is an electronic device or part thereof or a component in a battery.

**EP 4 610 289 A1**

**(Cont. next page)**

(52) Cooperative Patent Classification (CPC): (Cont.)
**C08G 18/797; C08L 75/16; H01M 10/052;
H01M 10/0565**

**Description**

The present invention relates to a composition for preparing shaped body with improved resistance to compositions comprising lithium salts, the composition comprising an elastomer comprising polyurethane units and ethylenically unsaturated units, wherein the elastomer is obtained or obtainable by reacting a composition (PC) comprising at least one polyol (P1) and at least one compound (E1) which comprises at least one ethylenically unsaturated group and an isocyanate component (IC) comprising at least one polyisocyanate. The present invention also relates to a shaped body with improved resistance to compositions comprising lithium salts, the shaped body comprising said composition, a process for preparing a shaped body and also the use of the composition according to the present invention for the preparation of a shaped body, wherein the shaped body is an electronic device or part thereof or a component in a battery.

New energy vehicles, especially pure electric vehicles, have continuously improved performance indicators such as the capacity and safety of their key components, power lithium batteries. These batteries typically consist of a high number of components, e.g. even the battery cap consists of 15 components. The high number of components rises the complexity of the production and gives rise to several problems occurring during the production. Additionally, the complexity is also a driver for production cost. So far polymeric materials such as polypropylene (PP), polyethylene (PE), polytetrafluorethylene (PTFE), polyvinylacetate (PVA), styrene-butadiene copolymers and other low functional materials have been used for sealing applications because they enable a good chemical resistance, which is required for applications with contact to the battery electrolyte. However, those materials suffer from ageing and do not show a good adhesion independent of the surface type. The common polyurethane elastomers do not show a sufficient resistance against liquid chemicals, such as an electrolyte. Resistance here, means that the polyurethane material suffers from swelling causing dimensional extension and weakening mechanical properties.

The development and manufacture of materials for power lithium batteries that have the characteristics of high barrier, corrosion resistance, and high ductility are one of the problems that the industry needs to solve urgently.

It has been found, however, that the existing polyurethane-based polymers are not necessarily successful in aggressive environments. The existing polyurethane-based polymers exhibit insufficient chemical and/or permeability resistance when placed into prolonged contact with organic reagents such as fuels and organic solvents. Accordingly, further improvements are warranted in the preparation of polyurethane-based polymers.

It was an object of the present invention to provide polyurethane based materials for the application in batteries which have improved properties for the application in lithium-ion batteries.

According to the present invention, this object has been solved by a composition for preparing shaped body with improved resistance to compositions comprising lithium salts, the composition comprising an elastomer comprising polyurethane units and ethylenically unsaturated units, wherein the elastomer is obtained or obtainable by reacting

(i) a composition (PC) comprising at least one polyol (P1) and at least one compound (E1) which comprises at least one ethylenically unsaturated group and
(ii) an isocyanate component (IC) comprising at least one polyisocyanate.

In the context of the present invention, improved resistance to compositions comprising lithium salts in particular means that the materials maintain their properties, in particular their mechanical properties when contacted with a composition comprising lithium salts. Preferably, over the lifetime of a lithium battery, the properties only decrease about 30 %, preferably about 20, more preferably about 10%.

It has surprisingly been found that the composition according to the present invention allows to simplify the production of prismatic cells by reducing the total number of components. By using a reactive material processed by molding technique, the battery cap can directly be sealed leading to a reduced number of required components. For the use in batteries, the sealing material requires good adhesion on metal surfaces and a steady performance over time must be secured. A good aging behavior has been demonstrated for the materials used according to the present invention, which also has a good adhesion to both, aluminum, and copper surfaces.

The properties of the polyurethane-based materials according to the present invention can be adjusted, for example by introducing a higher number of crosslinks and by blending the polyurethane with ethylenically unsaturated compounds. It has been found that a highly crosslinked system can be prepared, with better resistance against electrolyte and good adhesion can be provided as sealing material for lithium-ion batteries or for the preparation of parts of a battery.

In the context of the present invention, compositions comprising lithium salts in particular are compositions used in batteries based on $LiFePO_4$, $Li_4Ti_5O_{12}$, $LiNiMnCoO_2$ and $LiNiCoAlO_2$., $LiFPO_4$, $LiClO_4$, $LiPF_6$, $LiAsF_6$, $LiBF_4$, which may be dissolved in organic solvents like dimethyl carbonate (DMC), ethyl methyl carbonate (EMC), diethyl carbonate (DEC), ethylene carbonate (EC), or propylene carbonate.

Polyurethane for the purposes of the present invention comprehends any known polyisocyanate polyaddition products. These include addition products formed from isocyanate and alcohol and also modified polyurethanes which may comprise isocyanurate, allophanate, urea, carbodiimide, uretoneimine or biuret structures and further isocyanate addition products. These polyurethanes of the present invention comprise specifically compact polyisocyanate polyaddition products, such as thermosets, and foamed materials based on polyisocyanate polyaddition products, especially rigid polyurethane foams, as well as polyurethane coatings.

In a further preferred embodiment, the polyurethane is a compact polyurethane having a density of preferably more than 850 g/L, preferably 900 to 1400 g/L and more preferably 1000 to 1300 g/L. A compact polyurethane is obtained without admixing a blowing agent. Small amounts of blowing agent, for example water comprised in the polyols as a consequence of the production process, shall not be understood as blowing agent admixture for the purposes of the present invention. The reaction mixture for preparing the compact polyurethane preferably comprises less than 2 wt %, more preferably less than 1 wt % and especially less than 0. 5 wt % of water. The compact polyurethane may also comprise fillers, such as for example fibrous fillers.

According to the present invention, the elastomer is obtained or obtainable by reacting a composition (PC) comprising at least one polyol (P1) and at least one compound (E1) which comprises at least one ethylenically unsaturated group and an isocyanate component (IC) comprising at least one polyisocyanate.

Suitable components for the preparation of the elastomers are in principle known to the person skilled in the art.

Compound (E1) comprises at least one ethylenically unsaturated group and may have further functional groups which are reactive towards isocyanate groups. Compound (E1) may for example be selected from butadiene, isoprene, 1,3-pentadiene, 1,5-hexadiene, 1,7-octadiene, vinyl acrylates, vinyl methacrylate, methoxybutadiene, dipropylene glycol diacrylate, trimethylolpropane triacrylate, polybutadiene. It is also possible according to the present invention that compounds are used which comprise further functional groups which may for example react with isocyanate groups or further functional groups of the components of composition (PC). Preferably, compound (E1) has at least one terminal carbon-carbon double bond. Suitable components may for example be acrylates, methacrylates, and vinylesters, epoxyacrylates, polyesteracry-lates, urethane acrylates.

Suitable components may for example have a viscosity in the range of from 0.05 to 150 Pas, in particular in the range of from 0.5 to 50 Pas, more preferable in the range of from 2 to 20 Pas. Suitable compounds may have a functionality in the range of from 2.2 to 8.3, in particular in the range of from 2.2 to 4.2, more preferable in the range of from 2 to 2.4. Typically, suitable compounds have an OH/NH number in the range of from 3 to 350, in particular in the range of from 25 to 250 more preferable in the range of from 140 to 180.

The double bond functionality of compound (E1) typically is greater than 1, for example 2 or 3. When a plurality of compounds (E1) are used, the double bond density is the number average double bond density of the components used.

According to a further embodiment, the present invention is also directed to the composition as disclosed above, wherein compound (E1) has at least one terminal carbon-carbon double bond.

Useful compounds (E1), comprising at least one carbon-carbon double bond, preferably at least one terminal carbon-carbon double bond, include, for example, compounds comprising one or more vinyl groups. Preferably, the double bonds (i.e., the vinyl groups R-CH=CH2 ) of the compounds of component (E1) have a double bond density of in each case not less than 8%, for example in the range of from 8 to 30%, more preferable in the range of from 11 to 27%. To compute a double bond density for a compound in the manner of the present invention the mass fraction of the terminal double bonds is divided by the entire molecular mass. For the purposes of this computation, a terminal double bond is assumed to have a mass of 27 g/mol (-CH=CH2; 2 times carbon plus 3 times hydrogen).

According to a further embodiment, the present invention is also directed to the composition as disclosed above, wherein compound (E1) is selected from acrylates, methacrylates, and vinylesters.

Suitable polyols (P1) are in principle also known. Typically, useful compounds having on average not less than 1.5 isocyanate-reactive hydrogen atoms per molecule are used and include any compounds known in polyurethane chemistry and having isocyanate-reactive hydrogen atoms. These have an average functionality of not less than 1.5, preferably from 1.7 to 8, more preferably from 1.9 to 6 and especially from 2 to 4. These include polymeric compounds having isocyanate-reactive hydrogen atoms and a molecular weight of 300 g/mol or more.

Polymeric compounds suitable as polyol (P1) preferably have a number average molecular weight in the range from 400 to 15 000 g/mol. Useful compounds under this heading may thus be selected from the group of polyether polyols, polyesterols or mixtures thereof. Preferably polyol (P1) is selected from polyetherols.

Polyetherols are for example prepared from epoxies, such as propylene oxide and/or ethylene oxide, or from tetrahydrofuran with active-hydrogen starter compounds, such as aliphatic alcohols, phenols, amines, carboxylic acids, water or natural-based compounds, such as sucrose, sorbitol or mannitol, by using a catalyst. Suitable catalysts here include basic catalysts or double metal cyanide catalysts as described for example in PCT/EP2005/010124, EP 90444 or WO 05/090440. In particular, polyetherols prepared from propylene oxide and/or ethylene oxide may be used in the context of the present invention.

Polyol (P1) may also comprise further functional groups, for example hydrophobic groups. These are more preferably hydroxyl-functionalized compounds having hydrophobic groups. Such hydrophobic groups have hydrocarbon groups with preferably more than 6, more preferably more than 8 and fewer than 100 and especially more than 10 and fewer than 50 carbon atoms. Preferably, suitable polyols have no functional groups which are reactive towards acids or fluorinated compounds.

Suitable hydroxyl-functionalized hydrophobic compounds used are preferably hydroxyl-functionalized oleochemical compounds such as an oleochemical polyol. A whole series of hydroxyl-functional oleochemical compounds which can be used are known.

A further preferably employed group of oleochemical polyols is derivable by ring-opening of epoxidized fatty acid esters under concurrent reaction with alcohols and optionally subsequent further transesterification reactions. The incorporation of hydroxyl groups in oils and fats is mainly accomplished by epoxidizing the olefinic double bond comprised in these products and then reacting the resultant epoxy groups with a mono- or polyhydric alcohol. This turns the epoxy ring into a hydroxyl group or, in the case of polyhydric alcohols, into a structure having a higher number of OH groups. Since oils and fats are usually glycerol esters, the abovementioned reactions are accompanied by concurrent transesterification reactions. The compounds thus obtained preferably have a molecular weight in the range between 500 and 1500 g/mol. Products of this type are on offer from Cognis and Altropol for example.

Composition (PC) may also include chain extenders and crosslinking agents having an OH functionality of 2 to 6 and a molecular weight of less than 300 g/mol, preferably a functionality of 2 to 4 and more preferably of 2 to 3. Chain extender is the appellation for molecules having two isocyanate-reactive hydrogen atoms, while molecules having more than two isocyanate-reactive hydrogens are termed crosslinkers. These are usable individually or preferably in the form of mixtures. Preference is given to using diamines, diols and/or triols having molecular weights below 300 g/mol, more preferably in the range from 62 g/mol to below 300 g/mol and especially in the range from 62 g/mol to 250 g/mol. Suitable are, for example, aliphatic, cycloaliphatic and/or aliphatic or aromatic diamines and diols having 2 to 14, preferably 2 to 10 carbon atoms, such as diethyltoluenediamines (DEDTA), m-phenylenediamines, ethylene glycol, 1,2-propanediol, 2-methyl-1,3-propanediol, 1,3-propanediol, 1,4-butanediol, 1,6-hexanediol, 1,10-decanediol and bis(2-hydroxyethyl)hydroquinone (HQEE), 1,2-, 1,3-, 1,4-dihydroxycyclohexane, bisphenol A bishydroxyethyl (ether), diethylene glycol, dipropylene glycol, tripropylene glycol, triols, such as 1,2,4-, 1,3,5-trihydroxycyclohexane, glycerol and trimethylolpropane, diethanolamines, triethanolamines, and low molecular weight hydroxyl-containing polyalkylene oxides based on ethylene oxide and/or 1,2-propylene oxide and the aforementioned diols and/or triols as starter molecules. Particular preference for use as crosslinkers is given to low molecular weight hydroxyl-containing polyalkylene oxides based on ethylene oxide and/or 1,2-propylene oxide, more preferably 1,2-propylene, and trifunctional starters, especially glycerol and trimethylolpropane. Chain extenders which are particularly preferred are ethylene glycol, 1,2-propanediol, 1,3-propanediol, 2-methyl-1,3-propanediol, 1,4-butanediol, diethylene glycol, bis(2-hydroxyethyl)hydroquinone and dipropylene glycol.

The proportion of compounds comprising at least one carbon-carbon double bond (E1) is preferably in the range from 5 to 70 wt %, more preferably in the range from 25 to 60 wt % and especially in the range from 30 to 50 wt %, all based on the combined weight of the components of composition (PC).

According to a further embodiment, the present invention is also directed to the composition as disclosed above, wherein the content of compound (E1) in the composition (PC) is in the range of from 5 to 70 % by weight based on the weight of composition (PC).

Preferably, the content of ethylenically unsaturated groups in the elastomer is in the range of from 0.1wt%-25wt%, preferably in the range of from 0.5wt%-20wt%, in particular in the range of from 1wt%-15wt%.

According to a further embodiment, the present invention is also directed to the composition as disclosed above, wherein the content of ethylenically unsaturated groups in the elastomer is in the range of from 0.1wt%-25wt%.

According to the present invention, isocyanate component (IC) comprising at least one polyisocyanate. Also, suitable polyisocyanates used in composition (IC) are in principle known. Useful di- or polyisocyanates include any aliphatic, cycloaliphatic or aromatic isocyanates known for preparation of polyurethanes, and also any desired mixtures of said isocyanates. Examples are 2,2"-, 2,4"- and 4,4"-diphenylmethane diisocyanate, the mixtures of monomeric diphenylmethane diisocyanates and higher-nuclear homologs of diphenylmethane diisocyanate (polymeric MDI), isophorone diisocyanate (IPDI) or its oligomers, 2,4- or 2,6-tolylene diisocyanate (TDI) or mixtures thereof, tetramethylene diisocyanate or its oligomers, hexamethylene diisocyanate (HDI) or its oligomers, naphthylene diisocyanate (NDI) or mixtures thereof.

Preference for use as di- or polyisocyanates is given to isocyanates based on diphenylmethane diisocyanate, for example 2,4'-MDI, 4,4'-MDI, higher-nuclear homologs of MDI or mixtures of two or more thereof, especially polymeric MDI. The functionality of di- and polyisocyanates (a) is preferably in the range from 2.0 to 2.9 and more preferably in the range from 2.1 to 2.8. The DIN 53019-1 to 3 viscosity of di- or polyisocyanates at 25° C. is preferably between 5 and 900 mPas and more preferably between 10 and 300 mPas.

Di- and polyisocyanates may also be used in the form of polyisocyanate prepolymers. These polyisocyanate prepolymers are obtainable by above-described polyisocyanates being reacted in excess, for example at temperatures of 30 to 100° C, preferably at about 80° C, with compounds having two or more isocyanate-reactive groups, to form the prepolymer. The NCO content of polyisocyanate prepolymers according to the present invention is preferably in the range from 5 to 33 wt % of NCO, , in particular in the range from 10 to 30 wt % of NCO, more preferable in the range from 15 to 29 wt % of NCO.

Furthermore, composition (PC) and/or the isocyanate component (IC) may comprise further additives such as for example catalysts and/or auxiliaries.

Useful catalysts include polyurethane catalysts of the customary type. These hasten the reaction of compounds having isocyanate-reactive hydrogen atoms with di- and polyisocyanates to a substantial extent. Customary catalysts useful for preparing the polyurethanes include, for example, amidines, such as 2,3-dimethyl-3,4,5,6-tetrahydropyrimidine, tertiary amines, such as triethylamine, tributylamine, dimethylbenzylamine, N-methylmorpholine, N-ethylmorpholine, N-cyclohexylmorpholine, N,N,N',N'-tetramethylethylenediamine, N,N,N'N-tetramethylbutanediamine, N,N,N'N-tetramethylhexanediamine, pentamethyldiethylenetriamine, tetramethyldiaminoethyl ether, bis(dimethylaminopropyl)urea, dimethylpiperazine, 1,2-dimethylimidazole, 1-azabicyclo(3,3,0)octane, and preferably 1,4-diazabicyclo(2,2,2)octane and alkanolamine compounds, such as triethanolamine, triisopropanolamine, N-methyldiethanolamine, N-ethyldiethanolamine and dimethylethanolamine. Similarly useful are organometallic compounds, preferably organotin compounds, such as tin(II) salts of organic carboxylic acids, e.g., tin(II) acetate, tin(II) octoate, tin(II) ethylhexoate and tin(II) laurate and the dialkyltin(IV) salts of organic carboxylic acids, e.g., dibutyltin diacetate, dibutyltin dilaurate, dibutyltin maleate and dioctyltin diacetate, and also bismuth carboxylates, such as bismuth(III) neodecanoate, bismuth 2-ethylhexanoate and bismuth octanoate or mixtures thereof. Also benzopinacol or derivatives thereof such as for example silyl ethers of benzopinacol may be used. Organometallic compounds are usable alone or preferably in combination with strong basic amines. When component (b) is an ester, amine catalysts are preferably used exclusively.

Catalysts are for example usable in a concentration of 0.001 to 5 wt %, especially 0.05 to 2 wt % as catalyst or catalyst combination, based on the weight of the polyol (P1).

The double bonds of component (E1) may be free-radically polymerized during the polyurethane reaction of components (PC) and (IC) or in a step subsequent to the polyurethane reaction. Crosslinking the double bonds of the polyurethane material according to the present invention may here be effected via customary free-radical initiators, such as peroxides or AIBN. Crosslinking may further also be effected via irradiation with high-energy radiation, for example UV light, electron beam radiation or $\beta$- or $\gamma$-radiation. A further possible way to effect crosslinking is that of thermal crosslinking at temperatures above 100° C, preferably above 150° C, in the presence of oxygen. The preferred way to crosslink double bonds is via customary catalysts or free-radical initiators or via irradiation with high-energy radiation, more preferably via customary free-radical initiators or catalysts which are suitable for crosslinking, in particular at lower temperatures.

According to a further embodiment, the present invention is also directed to the composition as disclosed above, wherein the composition is curable by radiation or by reaction with reactive compounds or thermally curable, for example in the presence of a catalyst.

It is further possible to employ auxiliaries and/or added-substance materials. Any auxiliary and added-substance materials known for preparing polyurethanes are usable here. Suitable examples include surface-active substances, blowing agents, foam stabilizers, cell regulators, release agents, fillers, dyes, pigments, flame retardants, hydrolysis control agents, fungistatic and bacteriostatically acting substances. Substances of this type are known and for example described in "Kunststoffhandbuch, Band 7, Polyurethane", Carl Hanser Verlag, 3rd edition 1993, chapters 3.4.4 and 3.4.6 to 3.4.11.

In contrast, epoxy-containing compounds are not required for preparing the polyurethane materials of the present invention. Preferably, the polyurethane material of the present invention comprises substantially no epoxy-containing compounds. As a result, the proportion of epoxy-containing compounds, based on the combined weight of components, is less than 1 wt % and more preferably below 0.1 wt %.

In general, in the preparation of the polyurethane material of the present invention, the di- and/or polyisocyanates, the compounds having isocyanate-reactive hydrogen atoms and, if used, further compounds having isocyanate-reactive hydrogen atoms, such as blowing agents for example, are reacted in such amounts that the equivalence ratio between NCO groups of polyisocyanates and the sum total of isocyanate-reactive hydrogen atoms on further components is in the range from 0.8 to 8, preferably in the range from 0.9 to 6 and more preferably in the range from 0.95 to 4, in particular in the range from 1 to 3. A 1:1 ratio here corresponds to an isocyanate index of 100.

In one preferred embodiment, the cured polyurethane material of the present invention is obtained in one step. Here "in one step" is to be understood as meaning that the components for preparing the shaped article and, if present, additives, are all mixed together before commencement of the reaction and the reaction is subsequently carried on to obtain a cured polyurethane material without the admixture of further compounds and especially without admixture of further compounds comprising isocyanate-reactive groups.

This cured polyurethane material of the present invention is a solid. A solid is concerned in the context of the present invention when the Shore hardness of DIN EN ISO 868 is greater than 60 Shore A, preferably greater than 80 Shore A and especially greater than 90 Shore A. The presence of a cured polyurethane material that is in accordance with the present invention shall be independent of the crosslinking reaction of the double bonds of component (E1); that is, the definition of the cured polyurethane material is satisfied as soon as the Shore hardness is attained, irrespective of whether all, some or no double bonds have reacted with one another. The hardness typically continues to rise once the crosslinking reaction of the double bond has taken place.

The specific starting substances for preparing polyurethanes that are in accordance with the present invention each differ only minimally in quantitative and qualitative terms whether the polyurethane to be prepared as being in accordance with the present invention is a thermoplastic polyurethane, a rigid foam or a thermoset. For instance, no blowing agents are employed for preparing compact polyurethanes and it is strictly difunctional starting substances which are predominantly employed for thermoplastic polyurethane. It is further possible, for example via the functionality and the chain length of the comparatively high molecular weight compound having two or more reactive hydrogen atoms, to vary the elasticity and hardness of the polyurethane that is in accordance with the invention. Modifications of this type are known to the notional person skilled in the art.

The reactants are described for example in EP 0989146 or EP 1460094 for preparing a compact polyurethane and in PCT/EP2005/010955 for preparing a rigid foam. Compound (E1) is then additionally admixed in each case to the reactants described in these documents.

According to a further aspect, the present invention is also directed to a shaped body with improved resistance to compositions comprising lithium salts, the shaped body comprising the composition as disclosed above.

According to a preferred embodiment, the present invention is also directed to the shaped body as disclosed above, wherein the shaped body is a shaped body in contact with compositions comprising lithium salts, in particular an electronic device or part thereof or a component in a battery.

According to a further aspect, the present invention is also directed to a process for preparing a shaped body with improved resistance to compositions comprising lithium salts, the process comprising the steps of

(a) providing a composition comprising an elastomer comprising polyurethane units and ethylenically unsaturated units, wherein the elastomer is obtained or obtainable by reacting

(i) a composition (PC) comprising at least one polyol (P1) and at least one compound (E1) which comprises at least one ethylenically unsaturated group and
(ii) an isocyanate component (IC) comprising at least one polyisocyanate;

(b) shaping the composition provided in step (a);
(c) curing the composition.

According to the present invention, the process comprises steps (a) to (c) but may comprise further steps. Also, further components may be included, for example in the shaping step (b). Suitable processes for shaping the composition are in principle known and include for example injection molding, spraying, casting, pressing, or extrusion. Also, suitable processes for curing are in principle known and might for example include curing by radiation or by reaction with reactive compounds or thermal curing.

According to a further aspect, the present invention is also directed to the use of a composition as disclosed above for the preparation of a shaped body, wherein the shaped body is an electronic device or part thereof or a component in a battery such as in particular sealants and adhesives.

The shaped body may also comprise further components and may comprise polyvinylidene fluoride (PVDF), polytetrafluoroethylene (PTFE), polyvinyl alcohol (PVA), carboxymethyl cellulose (CMC) or styrene butadiene rubber (SBR).

The present invention includes the following embodiments, wherein these include the specific combinations of embodiments as indicated by the respective interdependencies defined therein.

The present invention is further illustrated by the following set of embodiments and combinations of embodiments resulting from the dependencies and back-references as indicated. In particular, it is noted that in each instance where a range of embodiments is mentioned, for example in the context of a term such as "The composition of any one of embodiments 1 to 4", every embodiment in this range is meant to be explicitly disclosed for the skilled person, i.e. the wording of this term is to be understood by the skilled person as being synonymous to "The composition of any one of embodiments 1, 2, 3 and 4". Further, it is explicitly noted that the following set of embodiments represents a suitably structured part of the general description directed to preferred aspects of the present invention, and, thus, suitably supports, but does not represent the claims of the present invention.

1. A composition for preparing shaped body with improved resistance to compositions comprising lithium salts, the composition comprising an elastomer comprising polyurethane units and ethylenically unsaturated units, wherein the elastomer is obtained or obtainable by reacting

(i) a composition (PC) comprising at least one polyol (P1) and at least one compound (E1) which comprises at least one ethylenically unsaturated group and

(ii) an isocyanate component (IC) comprising at least one polyisocyanate.

2. The composition according to embodiment 1, wherein compound (E1) has at least one terminal carbon-carbon double bond.

3. A composition for preparing shaped body with improved resistance to compositions comprising lithium salts, the composition comprising an elastomer comprising polyurethane units and ethylenically unsaturated units, wherein the elastomer is obtained or obtainable by reacting

(i) a composition (PC) comprising at least one polyol (P1) and at least one compound (E1) which comprises at least one ethylenically unsaturated group wherein compound (E1) has at least one terminal carbon-carbon double bond, and
(ii) an isocyanate component (IC) comprising at least one polyisocyanate.

4. The composition according to any one of embodiments 1 to 3, wherein compound (E1) is selected from acrylates, methacrylates, vinylesters, poxyacrylate, esteracrylate and urethanacrylate.

5. A composition for preparing shaped body with improved resistance to compositions comprising lithium salts, the composition comprising an elastomer comprising polyurethane units and ethylenically unsaturated units, wherein the elastomer is obtained or obtainable by reacting

(i) a composition (PC) comprising at least one polyol (P1) and at least one compound (E1) which comprises at least one ethylenically unsaturated group wherein compound (E1) is selected from acrylates, methacrylates, vinylesters, poxyacrylate, esteracrylate and urethanacrylate, and
(ii) an isocyanate component (IC) comprising at least one polyisocyanate.

6. The composition according to any one of embodiments 1 to 5, wherein the content of compound (E1) in the composition (PC) is in the range of from 5 to 70 % by weight based on the weight of composition (PC).

7. The composition according to any one of embodiments 1 to 6, wherein the content of ethylenically unsaturated groups in the elastomer is in the range of from 0.1wt% to 25 wt%.

8. The composition according to any one of embodiments 1 to 7, wherein the composition is curable by radiation or by reaction with reactive compounds or thermally curable.

9. A shaped body with improved resistance to compositions comprising lithium salts, the shaped body comprising the composition according to any one of embodiments 1 to 8.

10. A shaped body with improved resistance to compositions comprising lithium salts, the shaped body comprising a composition for preparing shaped body with improved resistance to compositions comprising lithium salts, the composition comprising an elastomer comprising polyurethane units and ethylenically unsaturated units, wherein the elastomer is obtained or obtainable by reacting

(i) a composition (PC) comprising at least one polyol (P1) and at least one compound (E1) which comprises at least one ethylenically unsaturated group and
(ii) an isocyanate component (IC) comprising at least one polyisocyanate.

11. The shaped body according to embodiment 10, wherein compound (E1) has at least one terminal carbon-carbon double bond.

12. The shaped body according to embodiment 10 or 11, wherein compound (E1) is selected from acrylates, methacrylates, vinylesters, poxyacrylate, esteracrylate und urethanacrylate.

13. The shaped body according to any one of embodiments 10 to 12, wherein the content of compound (E1) in the composition (PC) is in the range of from 5 to 70 % by weight based on the weight of composition (PC).

14. The shaped body according to any one of embodiments 10 to 13, wherein the content of ethylenically unsaturated groups in the elastomer is in the range of from 0.1wt%-25wt%.

15. The shaped body according to any one of embodiments 10 to 14, wherein the composition is curable by radiation or by reaction with reactive compounds or thermally curable.

16. The shaped body according to any one of embodiments 10 to 15, wherein the shaped body is a shaped body in contact with compositions comprising lithium salts, in particular an electronic device or part thereof or a component in a battery.

17. A process for preparing a shaped body with improved resistance to compositions comprising lithium salts, the process comprising the steps of

(a) providing a composition comprising an elastomer comprising polyurethane units and ethylenically unsaturated units, wherein the elastomer is obtained or obtainable by reacting

(i) a composition (PC) comprising at least one polyol (P1) and at least one compound (E1) which comprises at least one ethylenically unsaturated group and
(ii) an isocyanate component (IC) comprising at least one polyisocyanate;

(b) shaping the composition provided in step (a);
(c) curing the composition.

18. The process according to embodiment 17, wherein compound (E1) has at least one terminal carbon-carbon double bond.

19. The process according to embodiment 17 or 18, wherein compound (E1) is selected from acrylates, methacrylates, vinylesters, poxyacrylate, esteracrylate und urethanacrylate.

20. The process according to any one of embodiments 17 to 19, wherein the content of compound (E1) in the composition (PC) is in the range of from 5 to 70 % by weight based on the weight of composition (PC).

21. The process according to any one of embodiments 17 to 20, wherein the content of ethylenically unsaturated groups in the elastomer is in the range of from 0.1wt%-25wt%.

22. The process according to any one of embodiments 17 to 21, wherein the composition is curable by radiation or by reaction with reactive compounds or thermally curable.

23. Use of a composition according to any one of embodiments 1 to 8 for the preparation of a shaped body, wherein the shaped body is an electronic device or part thereof or a component in a battery.

24 Use of a composition comprising an elastomer comprising polyurethane units and ethylenically unsaturated units, wherein the elastomer is obtained or obtainable by reacting

(i) a composition (PC) comprising at least one polyol (P1) and at least one compound (E1) which comprises at least one ethylenically unsaturated group and
(ii) an isocyanate component (IC) comprising at least one polyisocyanate,

for the preparation of a shaped body, wherein the shaped body is an electronic device or part thereof or a component in a battery.

25. The use according to embodiment 24, wherein compound (E1) has at least one terminal carbon-carbon double bond.

26. The use according to embodiment 24 or 25, wherein compound (E1) is selected from acrylates, methacrylates, vinylesters, poxyacrylate, esteracrylate und urethanacrylate.

27. The use according to any one of embodiments 24 to 26, wherein the content of compound (E1) in the composition (PC) is in the range of from 5 to 70 % by weight based on the weight of composition (PC).

28. The use according to any one of embodiments 24 to 27, wherein the content of ethylenically unsaturated groups in the elastomer is in the range of from 0.1wt%-25wt%.

29. The use according to any one of embodiments 24 to 28, wherein the composition is curable by radiation or by reaction with reactive compounds or thermally curable.

Examples will be used below to illustrate the invention.

Examples

**1. Materials used**

| Component | Supplier | Explanation |
|---|---|---|
| Polyol 1 | BASF | Saccharose/Glycerin started polypropylenoxid polyol, functionality=4,3, OHZ = 490 mg KOH/g |
| Polyol 2 | BASF | Polypropylenoxide, functionality =2, OHZ = 104 mg KOH/g |
| Polyol 3 | Alberding Boley | Castor oil, Functionality=3, OHZ=160 mg KOH/g |
| Polyol 4 | BASF | N,N,N',N'-Tetrakis(2-hydroxypropyl)ethylenediamine started polypropylenoxid polyol, functionality=4, OHZ=753 mg KOH/g |
| Additive | | zeolite |
| Acrylate 1 | BASF | 2-Propenoic acid, 2-ethyl-2-[[(1-oxo-2-propenyl)oxy]methyl]-1,3-propanediylester Functionality=3 |
| | | |
| Acrylate 2 | BASF | Acrylate based on propoxylated glycerin, Functionality=3 |
| Epoxy acrylate 1 | BASF | Aromatic epoxyacrylate in tripropylene glycol diacrylate (30%) OHZ=158 mg KOH/g |
| Epoxy acrylate 2 | BASF | Aromatic epoxyacrylate in tripropylene glycol diacrylate (40%) OH-number=157 mg KOH/g |
| Epoxy acrylate 3 | BASF | Aromatic epoxyacrylate in tripropoylene glycol diacrylate (25%) OH-number=176 mg KOH/g |
| Epoxy acrylate 4 | BASF | Aromatic epoxyacrylate in propoxylated glyceryl triacrylate (25%) OH-number=175 mg KOH/g |
| Epoxy acrylate 5 | BASF | Aromatic expoxy acrylate without dilution OH-number=170 mg KOH/g |
| Additive | Dow Corning | Siliconbased defoamer |
| Catalyst | | Imidazoliumacetate |
| Catalyst | | Modified silicon compound |
| Catalyst | | Catalyst, potassium acetate in monoethylene glycol |
| Mixture of iso 1 and iso2 | BASF | NCO content 26.2% |
| Iso 1 | BASF | modified 4,4-diphenylmethane diisocyanate (MDI), average functionality about 2.05, NCO content 22.9 % |
| Iso 2 | BASF | Carbodiimid modified 4,4'-diphenylmethandiisocyanat (MDI), NCO content 29.5 % |

**2. Experimental Procedure**

2.1 Chemical formulation and preparation of test specimen

**General Example 1**

The formulation comprises an A component consisting of the listed polyols, and additives. The B component consisted of Iso 1. The index was set to 102. The A and B component were stored at RT and evacuated for 5 min at $800\ ^r/_{min}$ before mixing A and B component at RT with $1004\ ^r/_{min}$ for 1 min. The moulded plate used (6x10x0.2 cm), was equilibrated at RT and prepared with mould release agent (Indrosil 2000) before the reactive mixture was applied. After 8 h at RT the moulded plate, comprising the polymeric plaque, was heated to 70°C for 16 h to complete the reaction.

**General Example 2**

The formulation comprises an A component consisting of the listed polyols, acrylates, catalysts, and additives. The B component consisted of one of the listed prepolymers. The index was set according to the experiments to 200. The A and B component were stored at RT and evacuated for 5 min at $800\ ^r/_{min}$ before mixing A and B component at RT with $1000\ ^r/_{min}$ for 1 min. The moulded plate used (6x10x0.2 cm), was equilibrated at 145°C on a hotplate and prepared with mould release agent (Indrosil 2000) before the reactive mixture was applied. After 20 min at 145°C on the hotplate, the moulded plate was heated another 2 h at 145°C in the oven to complete the reaction.

**General Example 3**

The formulation comprises an A component consisting of the listed polyols, epoxyacrylates, catalysts, and additives. The B component consisted of Iso 2 (26.2% NCO). The index was set according to the experiments to 200. The A and B component were stored at RT and evacuated for 5 min at $800\ ^r/_{min}$ before mixing A and B component at RT according to the parameter set of 5 sec at $800\ ^r/_{min}$ followed by 40 sec at $1950\ ^r/_{min}$. The moulded plate used (6x10x0.2 cm), was equilibrated at RT and prepared with mould release agent (Indrosil 2000) before the reactive mixture was applied. After 16 h at RT the moulded plate, comprising the polymeric plaque, was heated to 145°C for 2 h to complete the reaction.

The received plaques were cut with a band saw into pieces of 2x7x0.2 cm to test swelling behavior of the polymeric material in battery acid.

2.2 Swelling test

PU test specimen were stored in electrolyte to investigate their chemical resistance against and swelling behavior in battery acid.

The battery acid used (supplier E-Lyte) was stored in a closed metal container, which was placed in a cool (< 30°C), dry, and ventilated cabinet. The metal container was opened, and 270 mL of battery acid was transferred into an alumina container (325 mL) to investigate the swelling behavior of three similar test specimen. The alumina container comprising the test specimen was sealed and stored in a 10 L white tin bucket for the test duration. In defined time intervals (7 d, 14 d, 35 d, 56 d) the three test specimens were removed with a pair of metal tweezers from the battery acid, rinsed with acetone and dried on pulp in an alumina cup for 7 d at RT. The first scaling was done after 30 min of drying, followed by two more after 24 hours and 24:30 hours. After 7 days of drying the test specimen were photo documented.

Battery acid:

Chemical: Lithium Hexafluorophosphate (1 M) (CAS 21324-40-3) in Ethylene carbonate (CAS 96-49-1) : Ethylmethyl carbonate (CAS 623-53-0) (30:70 wt%) with 2 wt% vinylene carbonate (CAS 872-36-6).

The examples are summarized in tables 1a and 1b.

Table 1a: summary of the examples

|  | Reference 1 | Example 1 | Example 2 | Example 3 | Example 4 |
|---|---|---|---|---|---|
| Polyol 1 |  | 59.7 | 59.7 | 59.7 | 60 |
| Polyol 2 |  |  |  |  |  |
| Polyol 3 | 77.3 |  |  |  |  |
| Polyol 4 | 19.7 |  |  |  |  |
| ZM | 3 | 5 | 5 | 5 | 5 |
| Acrylate 1 |  | 34.4 | 34.4 | 34.4 |  |
| Acrylate 2 |  |  |  |  | 34.6 |
| Epoxyacrylate 1 |  |  |  |  |  |
| Epoxyacrylate 2 |  |  |  |  |  |
| Epoxyacrylate 3 |  |  |  |  |  |
| Epoxyacrylate 4 |  |  |  |  |  |
| Epoxyacrylate 5 |  |  |  |  |  |
| ZM2 |  | 0.4 | 0.4 | 0.4 |  |
|  |  |  |  |  |  |
|  |  |  |  |  |  |
| Kat 1 |  | 0.5 | 0.5 | 0.5 | 0.4 |
|  |  |  |  |  |  |
|  |  |  |  |  |  |
| Iso 1 | 100 | 50 | 100 |  | 100 |
| Iso 2 |  | 50 |  | 100 |  |
|  |  |  |  |  |  |
| Index | 102 | 200 | 200 | 201 | 200 |
| MR (100:X) | 95 | 176 | 201 | 156 | 198 |
|  |  |  |  |  |  |
| T curing (°C) | 70 | 145 | 145 | 145 | 145 |
| time (h) | 24 | 2 | 2 | 2 | 2 |

Table 1b: summary of the examples

|  | Example 5 | Example 6 | Example 7 | Example 8 | Example 9 | Example 10 |
|---|---|---|---|---|---|---|
| Polyol 1 | 60 | 60 |  | 60 | 60 | 60 |
| Polyol 2 |  |  |  |  |  |  |
| Polyol 3 | 77.3 |  |  |  |  |  |
| Polyol 4 | 19.7 |  |  |  |  |  |
| ZM | 5 | 5 | 5 | 5 | 5 | 5 |
| Acrylate 1 | 33.6 |  |  |  |  |  |
| Acrylate 2 |  |  |  |  |  |  |
| Epoxyacrylate 1 |  | 33.6 |  |  |  |  |
| Epoxyacrylate 2 |  |  | 33.6 |  |  |  |
| Epoxyacrylate 3 |  |  |  | 33.6 |  |  |

(continued)

| | Example 5 | Example 6 | Example 7 | Example 8 | Example 9 | Example 10 |
|---|---|---|---|---|---|---|
| Epoxyacrylate 4 | | | | | 33.6 | |
| Epoxyacrylate 5 | | | | | | 33.6 |
| ZM2 | | | | | | |
| | 0.1 | 0.1 | 0.1 | 0.1 | 0.1 | 0.1 |
| | 0.4 | 0.4 | 0.4 | 0.4 | 0.4 | 0.4 |
| Kat 1 | 0.1 | 0.1 | 0.1 | 0.1 | 0.1 | 0.1 |
| | | | | | | |
| Mixture of iso 1 and iso2 NCO 26.2% | 100 | 100 | 100 | 100 | 100 | 100 |
| Iso 1 | | | | | | |
| Iso 2 | | | | | | |
| | | | | | | |
| Index | 200 | 200 | 200 | 200 | 200 | 200 |
| MR (100:X) | 100 | 100 | 100 | 100 | 100 | 100 |
| | | | | | | |
| T curing (°C) | 200 | 200 | 200 | 200 | 200 | 200 |
| time (h) | 100 | 100 | 100 | 100 | 100 | 100 |

The results of the swelling tests are summarized in tables 2a, and 2b.

Table 2a: summary of the swelling tests

| | Reference 1 | Example 1 | Example 2 | Example 3 | Example 4 |
|---|---|---|---|---|---|
| **Swelling/time** | | | | | |
| **0** | 0.0 | 0.0 | 0.0 | 0.0 | 0.0 |
| **7** | 16.1 | 0.1 | 1.0 | 0.0 | 0.4 |
| **14** | 26.9 | 0.1 | 1.4 | 0.1 | 0.6 |
| **35** | 40.5 | 0.2 | 2.2 | 0.2 | 0.7 |
| **56** | 43.6 | 0.3 | 1.9 | 0.2 | 0.8 |
| | | | | | |
| **DMTA (*)** | | | | | |
| **tan(d) (°C)** | **65** | **170** | **165** | **>200** | **160** |
| G" (°C) | 50 | 155 | 150 | 165 | 150 |
| (*) determined according to DIN EN ISO 6721-1:2011-08 | | | | | |

Table 2b: summary of the swelling tests

| | Example 5 | Example 6 | Example 7 | Example 8 | Example 9 | Example 10 |
|---|---|---|---|---|---|---|
| **Swelling/time** | | | | | | |
| **0** | 0.0 | 0.0 | 0.0 | 0.0 | 0.0 | 0.0 |
| **7** | -0.4 | -0.4 | -0.3 | -0.3 | -0.3 | -0.3 |
| **14** | -0.5 | -0.5 | -0.3 | -0.3 | -0.4 | -0.3 |
| **35** | -0.4 | -0.5 | -0.2 | -0.3 | -0.3 | -0.3 |

(continued)

|  | Example 5 | Example 6 | Example 7 | Example 8 | Example 9 | Example 10 |
|---|---|---|---|---|---|---|
| **Swelling/time** |  |  |  |  |  |  |
| **56** | 0.0 | -0.2 | 0.1 | 0.0 | -0.1 | 0.0 |
|  |  |  |  |  |  |  |
| **DMTA (*)** |  |  |  |  |  |  |
| **tan(d) (°C)** | **170** | **165** | **170** | - | **165** | **170** |
| G" (°C) | 140 | 150 | 150 |  | 150 | 150 |
| (*) determined according to DIN EN ISO 6721-1:2011-08 | | | | | | |

**Literature cited:**

"Kunststoffhandbuch, Band 7, Polyurethane", Carl Hanser Verlag, 3rd edition 1993, chapter 3.1 "Kunststoffhandbuch, Band 7, Polyurethane", Carl Hanser Verlag, 3rd edition 1993, chapters 3.4.4 and 3.4.6 to 3.4.11

EP 0989146

EP 1460094

PCT/EP2005/010955

**Claims**

1. A composition for preparing shaped body with improved resistance to compositions comprising lithium salts, the composition comprising an elastomer comprising polyurethane units and ethylenically unsaturated units, wherein the elastomer is obtained or obtainable by reacting

    (i) a composition (PC) comprising at least one polyol (P1) and at least one compound (E1) which comprises at least one ethylenically unsaturated group, and
    (ii) an isocyanate component (IC) comprising at least one polyisocyanate.

2. The composition according to claim 1, wherein compound (E1) has at least one terminal carbon-carbon double bond.

3. The composition according to claim 1 or 2, wherein compound (E1) is selected from acrylates, methacrylates, vinylesters, poxyacrylate, esteracrylate and urethanacrylate.

4. The composition according to any one of claims 1 to 3, wherein the content of compound (E1) in the composition (PC) is in the range of from 5 to 70 % by weight based on the weight of composition (PC).

5. The composition according to any one of claims 1 to 4, wherein the content of ethylenically unsaturated groups in the elastomer is in the range of from 0.1wt%-25wt%.

6. The composition according to any one of claims 1 to 5, wherein the composition is curable by radiation or by reaction with reactive compounds or thermally curable.

7. A shaped body with improved resistance to compositions comprising lithium salts, the shaped body comprising the composition according to any one of claims 1 to 6.

8. The shaped body according to claim 7, wherein the shaped body is a shaped body in contact with compositions comprising lithium salts, in particular an electronic device or part thereof or a component in a battery.

9. A process for preparing a shaped body with improved resistance to compositions comprising lithium salts, the process comprising

  (a) providing a composition comprising an elastomer comprising polyurethane units and ethylenically unsaturated units, wherein the elastomer is obtained or obtainable by reacting

    (i) a composition (PC) comprising at least one polyol (P1) and at least one compound (E1) which comprises at least one ethylenically unsaturated group and
    (ii) an isocyanate component (IC) comprising at least one polyisocyanate;

  (b) shaping the composition provided in step (a);
  (c) curing the composition.

10. Use of a composition according to any one of claims 1 to 6 for the preparation of a shaped body, wherein the shaped body is an electronic device or part thereof or a component in a battery.

Europäisches
Patentamt

European
Patent Office

Office européen
des brevets

# EUROPEAN SEARCH REPORT

**Application Number**

EP 24 16 0556

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 321 774 A (UNIV HUAZHONG SCIENCE TECH) 31 August 2021 (2021-08-31) <br> * claims 1,10; figure 2; examples 1-8 * <br> ----- | 1-10 | INV. <br> C08G18/48 <br> C08G18/58 <br> C08G18/67 |
| X | CN 105 602 497 A (ZHEJIANG CASNOVO MAT CO LTD) 25 May 2016 (2016-05-25) <br> * claims 1,9; examples 1-6 * <br> ----- | 1-10 | C08G18/76 <br> C08L75/16 <br> H01M10/052 <br> H01M10/0565 |

|  |
|---|
| **TECHNICAL FIELDS SEARCHED (IPC)** |
| C08G <br> H01M <br> C08L |

The present search report has been drawn up for all claims

| Place of search | Date of completion of the search | Examiner |
|---|---|---|
| Munich | 25 July 2024 | Buestrich, Ralf |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 0556

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2024

| Patent document cited in search report | Publication date | Patent family member(s) | Publication date |
|---|---|---|---|
| CN 113321774 A | 31-08-2021 | NONE | |
| CN 105602497 A | 25-05-2016 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2005010124 W
- EP 90444 A
- WO 05090440 A

- EP 0989146 A
- EP 1460094 A
- EP 2005010955 W

**Non-patent literature cited in the description**

- Polyurethane. Kunststoffhandbuch. Carl Hanser Verlag, 1993, vol. 7
- *CHEMICAL ABSTRACTS*, 21324-40-3

- *CHEMICAL ABSTRACTS*, 623-53-0
- *CHEMICAL ABSTRACTS*, 872-36-6